# FASCICULE DE BREVET EUROPEEN

(11) **EP 3 819 767 B1**
(45) Date de publication et mention de la délivrance du brevet: **29.11.2023**
(21) Numéro de dépôt: 20205519.0
(22) Date de dépôt: 03.11.2020
(51) Int. Cl.: G06F 11/07, B64D 45/00, G06F 11/30, G06F 11/34

(54) **PROCÉDÉ ET DISPOSITIF ÉLECTRONIQUE DE SURVEILLANCE D'UNE APPLICATION LOGICIELLE AVIONIQUE VIA DES COMPTEURS D'APPEL(S) SYSTÈME, PROGRAMME D'ORDINATEUR ET SYSTÈME AVIONIQUE ASSOCIÉS**
VERFAHREN UND ELEKTRONISCHE VORRICHTUNG ZUR ÜBERWACHUNG EINER SOFTWAREANWENDUNG FÜR LUFTFAHRZEUGE ÜBER AUFRUFZÄHLER, ENTSPRECHENDES SYSTEM, COMPUTERPROGRAMM UND FLUGZEUGSYSTEM
METHOD AND ELECTRONIC DEVICE FOR MONITORING AN AVIONIC SOFTWARE APPLICATION BY MEANS OF SYSTEM CALL METERS, ASSOCIATED COMPUTER PROGRAM AND AVIONICS SYSTEM

(30) Priorité: 07.11.2019 FR 1912491
(43) Date de publication de la demande: 12.05.2021
(73) Titulaire: THALES, 92400 Courbevoie (FR)
(72) Inventeur: MONNIER, Stephane, Jean-Mary, 33701 MERIGNAC (FR)
(74) Mandataire: Lavoix

(56) Documents cités:
- EP-A1- 3 399 720
- EP-A1- 3 470 986
- CN-A- 110 297 648
- CARELLI ALBERTO ET AL: "Performance Monitor Counters: Interplay Between Safety and Security in Complex Cyber-Physical Systems", IEEE TRANSACTIONS ON DEVICE AND MATERIALS RELIABILITY, IEEE SERVICE CENTER, PISCATAWAY, NJ, US, vol. 19, no. 1, 1 mars 2019 (2019-03-01), pages 73-83, XP011713517, ISSN: 1530-4388, DOI: 10.1109/TDMR.2019.2898882 [extrait le 2019-03-05]

## Description

La présente invention concerne également un dispositif électronique de surveillance d'une application logicielle avionique apte à être exécutée sur une plateforme hébergeant un système d'exploitation, la plateforme étant destinée à être embarquée à bord d'un aéronef.

L'invention concerne également un système électronique avionique comprenant une mémoire apte à stocker au moins une application logicielle avionique ; une plateforme apte à exécuter chaque application logicielle avionique, la plateforme hébergeant un système d'exploitation ; et un tel dispositif électronique de surveillance de chaque application logicielle avionique.

L'invention concerne un procédé de surveillance d'une application logicielle avionique apte à être exécutée sur une plateforme hébergeant un système d'exploitation, la plateforme étant destinée à être embarquée à bord d'un aéronef, le procédé étant mis en oeuvre par un tel dispositif électronique de surveillance.

L'invention concerne également un programme d'ordinateur comportant des instructions logicielles qui, lorsqu'elles sont exécutées par un ordinateur, mettent en oeuvre un tel procédé de surveillance.

L'invention concerne le domaine de la cyber-sécurité et de la sûreté de fonctionnement (de l'anglais *safety*) des plateformes avioniques embarquées, en particulier de la surveillance des applications logicielles exécutées sur de telles plateformes avioniques embarquées.

On connait du document FR 3 065 945 A1 un procédé et un dispositif électronique de surveillance d'une application logicielle avionique apte à être exécutée sur une plateforme comportant des ressources et hébergeant un système d'exploitation, la plateforme étant destinée à être embarquée à bord d'un aéronef. Cette surveillance est effectuée via la mise en oeuvre d'au moins une surveillance parmi une surveillance syntaxique de chaque appel émis par l'application à destination du système d'exploitation, une surveillance sémantique de chaque appel émis par l'application à destination du système d'exploitation, une surveillance d'une dynamique des appels émis par l'application à destination du système d'exploitation, et une surveillance de l'utilisation par l'application des ressources de la plateforme. Cette surveillance comporte alors la génération d'un signal d'alerte en cas de détection d'un comportement anormal de l'application lors de la mise en oeuvre d'au moins l'une des dites surveillances.

Toutefois, une telle surveillance est relativement complexe.

Le document EP 3 470 986 A1 décrit la surveillance d'une application logicielle avionique, basée sur une surveillance de la durée d'exécution de celle-ci.

Le document CN 110 297 648 A décrit un procédé permettant de déclasser et de restaurer des applications logicielles.

Le document « Performance Monitor Counters: Interplay Between Safety and Security in Complex Cyber-Physical Systems » de A. Carelli et al analyse comment les compteurs de contrôle de performance disponibles dans des microprocesseurs commerciaux, tels que les compteurs CCC (de l'anglais *Clock Cycle Counter*) et DCM (de l'anglais *Data Cache-Miss counter*) des architectures Intel^{®}, peuvent avoir de graves implications sur l'interaction de la sûreté et de la sécurité d'un système cyber-physique.

On connait du document « System calls instrumentation for intrusion détection in embeded mixed-criticality systems » de Kadar et al, 4th International Workshop on Security and Dependability of Critical Embedded Real-Time Systems (CERTS 2019), un procédé de surveillance des appels au système d'exploitation (de l'anglais *system call*) utilisant un traceur d'appels système, intégré au noyau du système d'exploitation. Un tel traçage permet alors de détecter une intrusion à l'intérieur du système embarqué faisant l'objet de cette surveillance.

Toutefois, un tel traçage des appels système est relativement complexe et a en outre un impact sur le temps-réel, ce traçage entraînant des délais additionnels, ainsi que discuté dans ce document.

Le but de l'invention est alors de proposer un dispositif électronique et un procédé de surveillance d'une application logicielle avionique apte à être exécutée sur une plateforme avionique, qui permettent de détecter plus efficacement une attaque visant l'application logicielle ou un comportement anormal de l'application logicielle.

A cet effet, l'invention a pour objet un dispositif électronique de surveillance d'une application logicielle avionique, selon la revendication 1.

Ainsi, avec le dispositif électronique de surveillance selon l'invention, l'acquisition des valeurs respectives des premier et deuxième compteurs, puis leur comparaison à des premier et deuxième seuils respectifs permet de vérifier simplement si chaque application logicielle surveillée est toujours en vie, i.e. opérationnelle, et de générer un signal d'alerte en cas de détection d'un comportement anormal de l'application surveillée.

En outre, l'implémentation de cette surveillance est simple, et l'impact sur le temps-réel est alors limité, puisqu'un seul et unique compteur est mis à jour à chaque appel système d'une application logicielle, chaque compteur étant en outre directement implémenté par le système d'exploitation.

Ainsi, la surveillance des applications logicielles se limite à surveiller l'évolution des premier et deuxième compteurs pour chaque application, et la simplicité de ce mécanisme permet alors une surveillance sans dégradation des performances du système électronique avionique.

Suivant d'autres aspects avantageux de l'invention, le dispositif de surveillance est selon l'une quelconque des revendications 2 à 7.

L'invention a également pour objet un système électronique avionique selon la revendication 8.

L'invention a également pour objet un procédé de surveillance d'une application logicielle avionique, selon la revendication 9.

L'invention a également pour objet un programme d'ordinateur selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

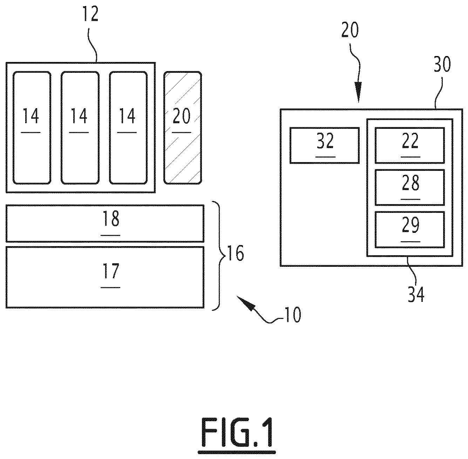

- la figure 1 est une représentation schématique d'un système électronique avionique selon l'invention, comprenant une mémoire apte à stocker au moins une application logicielle avionique ; une plateforme apte à exécuter chaque application logicielle avionique, la plateforme comportant des ressources et hébergeant un système d'exploitation ; et un dispositif électronique de surveillance de chaque application logicielle avionique ;

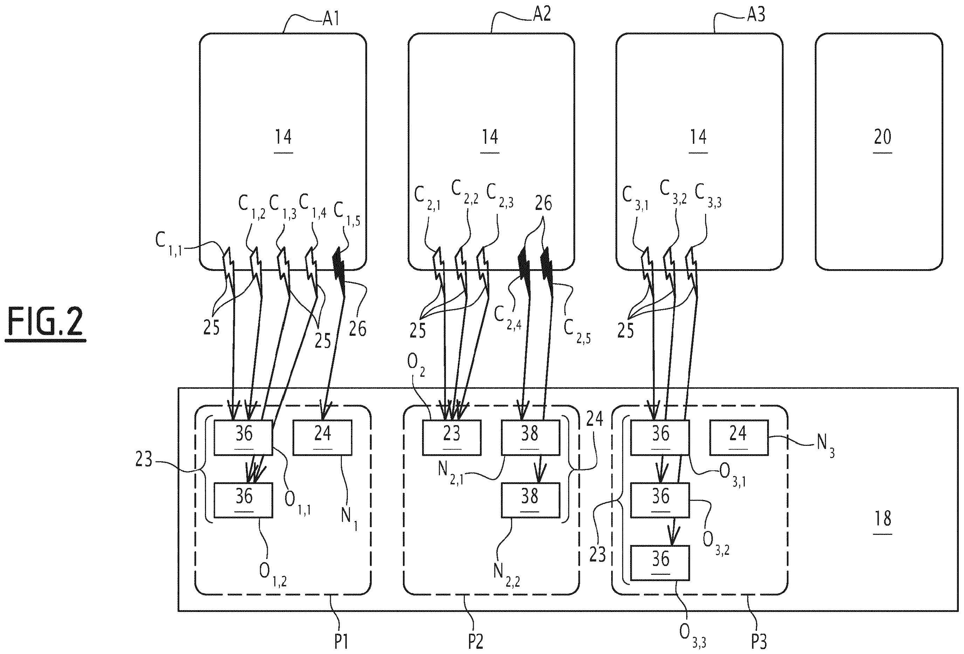

- la figure 2 est une représentation schématique illustrant des appels émis par plusieurs applications logicielles surveillées à différents services du système d'exploitation, avec l'incrémentation d'un premier compteur respectif pour chaque application surveillée à chaque appel réussi de ladite application et l'incrémentation d'un deuxième compteur pour chaque application surveillée à chaque appel en erreur de ladite application ; et

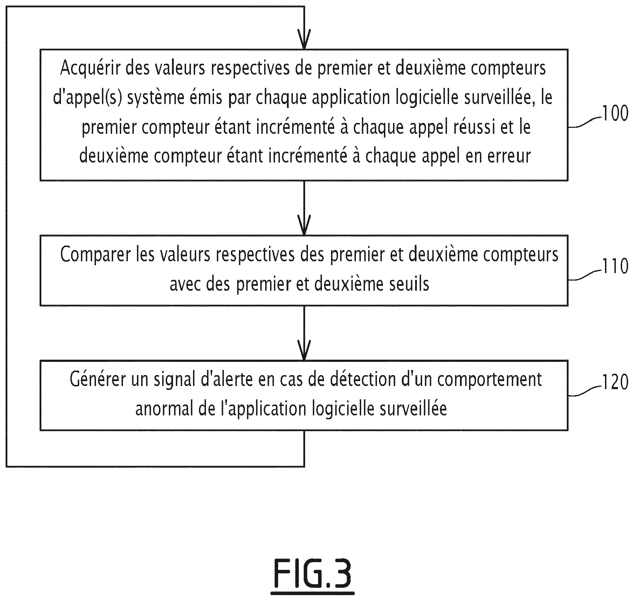

- la figure 3 est un organigramme d'un procédé, selon l'invention, de surveillance d'une application logicielle avionique apte à être exécutée sur la plateforme, le procédé étant mis en oeuvre par le dispositif de surveillance des figures 1 et 2.

Dans la suite de la description, l'expression « sensiblement égal(e) à » définit une relation d'égalité à plus ou moins 10%, de préférence encore à plus ou moins 5%.

Sur la figure 1, un système électronique avionique 10, destiné à être embarqué à bord d'un aéronef, comprend une mémoire 12 apte à stocker au moins une application logicielle avionique 14 ; une plateforme 16 apte à exécuter chaque application logicielle avionique 14, la plateforme 16 comportant des ressources 17 et hébergeant un système d'exploitation 18.

Le système électronique avionique 10 comprend en outre, selon l'invention, un dispositif électronique 20 de surveillance de chaque application logicielle avionique 14.

L'aéronef est de préférence un avion. En variante, l'aéronef est un hélicoptère, ou encore un drone piloté à distance par un pilote.

Dans l'exemple des figures 1 et 2, la mémoire 12 est apte à stocker trois applications logicielles avioniques 14 distinctes, et le dispositif électronique de surveillance 20 est alors configuré pour surveiller chacune de ces applications logicielles avioniques 14.

Chaque application logicielle avionique 14 est destinée à être exécutée par la plateforme 16 et alors conçue pour émettre un ou plusieurs appels à destination du système d'exploitation 18 hébergé par la plateforme 16 et est également configurée pour utiliser des ressources 17 de la plateforme 16.

Chaque application logicielle avionique 14 est également appelée fonction avionique. Les applications logicielles avioniques 14 remplissent différentes fonctions pour l'accomplissement d'un vol, et sont par exemple installées sur différentes plateformes 16 et utilisent les ressources 17 desdites plateformes 16.

De telles fonctions étant critiques, comme par exemple le système de freinage ou le système de gestion du vol, chaque application logicielle avionique 14 est de préférence surveillée régulièrement par le dispositif électronique de surveillance 20, pendant sensiblement toute la durée d'exécution de l'application logicielle avionique 14 par la plateforme 16.

La plateforme 16 est destinée à être embarquée à bord de l'aéronef. La plateforme 16 est, par exemple, une unité de traitement d'informations formée d'une ou plusieurs mémoires associées à un ou plusieurs processeurs.

Les ressources 17 de la plateforme 16 sont des éléments physiques ou logiques propres à être mis à disposition de la ou des applications logicielles avioniques 14. Les ressources 17 sont, par exemple, réparties en les catégories suivantes :
- les ressources de type traitement de données (en anglais « *processing* »). De telles ressources sont, par exemple, la puissance de calcul d'un processeur ou la capacité de stockage d'une mémoire.
- les ressources de type entrées et sorties.
- les ressources spécifiques au réseau avionique. De telles ressources sont, par exemple, les routeurs de communication d'un réseau ARINC664, en particulier ARINC664 Partie 3 ou ARINC664 Partie 7.
- les ressources de type graphique, c'est-à-dire les ressources permettant un affichage. Un écran est un exemple de telles ressources.
- les ressources de type mémoire de masse (en anglais « *mass memory* »)*.*

Le système d'exploitation 18 est, par exemple, un système d'exploitation conforme à la norme ARINC 653, ou un système d'exploitation POSIX, ou encore un hyperviseur, ou encore un middleware.

L'homme du métier comprendra alors que le système d'exploitation 18 s'entend au sens large et est, de manière plus générale, un ensemble d'au moins un logiciel de base, conçu pour offrir des services de différents types à chaque application 14.

Un service est donc une fonction du logiciel de base utilisable par la ou les applications 14 et atteignable par un appel, également appelé appel à un service (de l'OS) ou encore appel système. Un exemple de logiciel de base est un OS ARINC 653 ou POSIX qui fournit de tels services. Dans le contexte de l'invention, l'homme du métier comprendra que c'est la notion d'appel à un service qui importe, et non pas le service en tant que tel, offert par le logiciel de base.

Les services offerts par le système d'exploitation 18 sont connus en soi, et sont par exemple des services d'acquisition d'entrée(s)/sortie(s), de gestion de processus, de gestion de protocole(s) de communication, etc. Les types de service sont alors l'acquisition d'entrée(s)/sortie(s), la gestion de processus, la gestion de protocole(s) de communication et la gestion d'une temporisation, en particulier son déclenchement.

L'homme du métier notera que les normes ARINC 653 et POSIX comportent, par exemple, chacune une liste des services généralement employés dans le domaine aéronautique. L'homme du métier observera toutefois que l'invention concerne plus généralement tout logiciel de base adapté à une application logicielle avionique 14, dans la mesure où le ou les services offerts par ce logiciel de base, ainsi que le ou les appels au(x) service(s) émis par chaque application logicielle avionique 14, sont identifiables.

Le dispositif électronique de surveillance 20 est configuré pour surveiller chaque application logicielle avionique 14 apte à être exécutée sur la plateforme 16, et comprend un module 22 d'acquisition de valeurs respectives de premier 23 et deuxième 24 compteurs pour chaque application logicielle 14 surveillée, les premier 23 et deuxième 24 compteurs étant chacun un compteur d'appel(s) 25, 26 émis par l'application logicielle 14 surveillée à un ou plusieurs services du système d'exploitation 18, le premier compteur 23 étant incrémenté à chaque appel réussi 25 à un service respectif et le deuxième compteur 24 étant incrémenté à chaque appel en erreur 26.

Le dispositif électronique de surveillance 20 comprend également un module 28 de comparaison des valeurs respectives des 23 et deuxième 24 compteurs avec des premier S1 et deuxième S2 seuils respectifs, et un module 29 de génération d'un signal d'alerte en cas de détection d'un comportement anormal de l'application logicielle 14 surveillée, correspondant au premier compteur 23 de valeur inférieure au premier seuil S1 au cours d'une période temporelle T prédéfinie et/ou au deuxième compteur 24 de valeur supérieure au deuxième seuil S2.

Dans l'exemple de la figure 1, le dispositif de surveillance 20 est, par exemple distinct de la plateforme 16, et comprend une unité de traitement d'informations 30 formée par exemple d'un processeur 32 associé à une mémoire 34.

En variante, pour laquelle le dispositif de surveillance 20 est représenté en hachuré sur la figure 1, le dispositif de surveillance 20 est apte à être exécuté directement par la plateforme 16 et à utiliser alors ses ressources 17. Cette variante est un mode de réalisation préférentiel, et le dispositif de surveillance 20 est alors de préférence hébergé en outre au sein d'une partition mémoire spécifique de la plateforme 16, cette partition spécifique étant elle-même protégée contre des cyber-attaques, via par exemple un ou plusieurs contrôles d'accès et/ou une protection en intégrité.

Dans l'exemple de la figure 1, que le dispositif de surveillance 20 soit distinct de la plateforme 16, ou bien hébergé et exécuté par la plateforme 16, le module d'acquisition 22, le module de comparaison 28 et le module de génération 29 sont réalisés chacun sous forme d'un logiciel, ou d'une brique logicielle, exécutable par un processeur, tel que le processeur 32 lorsque le dispositif de surveillance 20 est distinct de la plateforme 16. La mémoire 34 du dispositif de surveillance 20 est alors apte à stocker un logiciel d'acquisition des valeurs respectives des premier 23 et deuxième 24 compteurs pour chaque application logicielle 14 surveillée, un logiciel de comparaison des valeurs respectives des 23 et deuxième 24 compteurs avec les premier S1 et deuxième S2 seuils respectifs, et un logiciel de génération du signal d'alerte en cas de détection d'un comportement anormal de l'application logicielle 14 surveillée. Le processeur est alors apte à exécuter le logiciel d'acquisition, le logiciel de comparaison et le logiciel de génération.

En variante non représentée, le module d'acquisition 22, le module de comparaison 28 et le module de génération 29 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif de surveillance 20 est réalisé sous forme d'un ou plusieurs logiciels, c'est-à-dire en forme d'un programme d'ordinateur, il est en outre apte à être enregistré sur un support, non représenté, lisible par ordinateur. Le support lisible par ordinateur est, par exemple, un médium adapté à mémoriser des instructions électroniques et capable d'être couplé à un bus d'un système informatique. A titre d'exemple, le support lisible est une disquette ou disque souple, (de la dénomination anglaise *Floppy disk*), un disque optique, un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique. Sur le support lisible est alors mémorisé un programme d'ordinateur comprenant des instructions logicielles.

Le module d'acquisition 22 est configuré pour acquérir la valeur du premier compteur 23 et la valeur du deuxième compteur 24 pour chaque application logicielle 14 surveillée, le premier compteur 23 étant un compteur d'appel(s) réussi(s) 25 au(x) service(s) du système d'exploitation 18, émis par l'application logicielle 14 surveillée, et le deuxième compteur 24 étant un compteur d'appel(s) en erreur 26 au système d'exploitation 18, émis par l'application logicielle 14 surveillée.

Le module d'acquisition 22 est de préférence configuré pour acquérir régulièrement les valeurs respectives des premier 23 et deuxième 24 compteurs pour chaque application logicielle 14 surveillée.

Le module d'acquisition 22 est par exemple configuré pour acquérir, à une fréquence d'acquisition prédéfinie, lesdites valeurs respectives des premier et deuxième compteurs 23, 24. La fréquence d'acquisition prédéfinie est de préférence supérieure à 2 Hz, de préférence encore sensiblement comprise entre 10 Hz et 20 Hz. Autrement dit, la période temporelle entre deux acquisitions successives est de préférence inférieure à 500 ms, la période temporelle entre deux acquisitions successives étant de préférence encore sensiblement comprise entre 50 ms et 100 ms.

Chaque premier compteur 23 et chaque deuxième compteur 24 sont de préférence incrémentés par le système d'exploitation 18 lui-même. Le système d'exploitation 18 comporte, par exemple, une pluralité de partitions, notées P1, P2, P3 dans l'exemple de la figure 2, chaque application logicielle 14 étant associée à une partition P1, P2, P3 respective. Dans l'exemple de la figure 2, une première application logicielle 14, notée A1, est associée à une première partition, notée P1, une deuxième application logicielle 14, notée A2, est associée à une deuxième partition, notée P2, et une troisième application logicielle 14, notée A3, est associée à une troisième partition, notée P3. Chaque premier compteur 23 et chaque deuxième compteur 24 sont alors de préférence associés à une partition P1, P2, P3 respective. Chaque premier compteur 23 et chaque deuxième compteur 24 sont mis en oeuvre dès le lancement de l'application logicielle 14 correspondante, et sont réinitialisés à chaque nouveau lancement de l'application logicielle 14 correspondante.

Chaque premier compteur 23 est incrémenté, de préférence d'une unité, à chaque appel réussi 25 à un service respectif du système d'exploitation 18, et chaque deuxième compteur 24 est incrémenté, de préférence d'une unité, à chaque appel en erreur 26 au système d'exploitation 18 par l'application logicielle 14 respective surveillée.

Lorsque le premier compteur 23 est incrémenté d'une unité à chaque appel réussi 25, le premier seuil S1 est de préférence égal à 1 ; et lorsque le deuxième compteur 24 est incrémenté d'une unité à chaque appel en erreur 26, le deuxième seuil S2 est de préférence égal à 0.

Par appel réussi 25, on entend un appel système (de l'anglais *system call*) correctement réalisé, le service du système d'exploitation 18 requis par l'application logicielle 14 étant alors rendu, ou encore offert.

Par appel en erreur 26, on entend un appel système qui n'a pas été correctement réalisé et qui est alors ressorti en erreur avant d'être terminé, par exemple suite à une demande incorrectement formatée, ou encore à une demande d'accès refusée.

Le module de comparaison 28 est configuré pour comparer les valeurs respectives des premier et deuxième compteurs 23, 24, acquises pour chaque application logicielle 14 surveillée, avec des premier et deuxième seuils S1, S2 respectifs. Le premier seuil S1, est par exemple égal à 1, étant donné que chaque application logicielle 14 surveillée est destinée à effectuer au moins un appel à un service respectif du système d'exploitation 18. Le deuxième seuil S2 est par exemple égal à 0, afin de remonter une alerte dès qu'une application logicielle 14 surveillée a provoqué un appel en erreur 26 auprès du système d'exploitation 18.

Le module de génération 29 est alors configuré pour générer le signal d'alerte en cas de détection d'un comportement anormal de l'application logicielle 14 surveillée, ce comportement anormal correspond soit à une valeur du premier compteur 23 respectif inférieure au premier seuil S1 au cours de la période temporelle T prédéfinie, soit à une valeur du deuxième compteur 24 supérieure au deuxième seuil S2, ou encore à la fois au deux cas précités.

La période temporelle T prédéfinie est par exemple de valeur sensiblement comprise entre 100 ms et 500 ms, de préférence sensiblement égale à 200 ms.

En complément facultatif, au moins un premier compteur 23 comporte un ensemble de premiers compteurs élémentaires 36, chaque premier compteur élémentaire 36 étant associé à un type d'appel émis par l'application logicielle surveillée 14 à destination du système d'exploitation 18, un unique premier compteur élémentaire 36 dudit ensemble étant incrémenté à chaque appel réussi 25. Le module d'acquisition 22 est alors configuré pour acquérir la valeur respective de chacun des premiers compteurs élémentaires 36 dudit ensemble. Le module de comparaison 28 est ensuite configuré pour comparer les valeurs respectives des premiers compteurs élémentaires 36 avec des premiers seuils élémentaires respectifs. Le module de génération 29 est configuré pour générer le signal d'alerte en cas de détection d'un comportement anormal de l'application logicielle 14 surveillée, correspondant à au moins l'un des premiers compteurs 36 de valeur inférieure au premier seuil élémentaire respectif au cours de la période temporelle T prédéfinie.

Lorsqu'un premier compteur 23 comporte plusieurs premiers compteurs élémentaires 36, l'homme du métier comprendra que ledit premier compteur 23 est, autrement dit, subdivisé en premiers compteurs élémentaires 36. Ces premiers compteurs élémentaires 36 permettent alors d'avoir une information plus pertinente sur le type, ou encore la nature, du ou des services appelés par l'application logicielle 14 surveillée et d'effectuer alors une surveillance plus pertinente de ladite application logicielle 14.

Chaque premier compteur élémentaire 36 respectif est incrémenté, de préférence d'une unité, à chaque appel réussi 25. Lorsque le premier compteur élémentaire 36 est incrémenté d'une unité à chaque appel réussi 25, le premier seuil élémentaire correspondant est de préférence égal à 1.

Chaque type d'appel est par exemple choisi parmi le groupe consistant en : un appel à un service d'acquisition d'entrée/sortie, un appel à un service de gestion des processus, un appel à un service de gestion de protocoles de communication, un appel à un service de gestion d'une zone mémoire, tel qu'un service de mise à jour de ladite zone mémoire, en particulier un service de gestion de droits pour la mise à jour de ladite zone mémoire, telle qu'une mémoire FLASH.

En complément facultatif encore ou en variante, au moins un deuxième compteur 24 comporte un ensemble de deuxièmes compteurs élémentaires 38, chaque deuxième compteur élémentaire 38 étant associé à un type d'erreur, un unique deuxième compteur élémentaire 38 dudit ensemble étant incrémenté à chaque appel en erreur 26. Le module d'acquisition 22 est alors configuré pour acquérir la valeur respective de chacun des deuxièmes compteurs élémentaires 38 dudit ensemble. Le module de comparaison 28 est configuré pour comparer les valeurs respectives des deuxièmes compteurs élémentaires 38 avec des deuxièmes seuils élémentaires respectifs. Le module de génération 29 est configuré pour générer le signal d'alerte en cas de détection d'un comportement anormal de l'application logicielle 14 surveillée, correspondant à au moins l'un des deuxièmes compteurs élémentaires 38 de valeur supérieure au deuxième seuil élémentaire respectif.

Lorsqu'au moins un deuxième compteur 24 comporte plusieurs deuxièmes compteurs élémentaires 38, l'homme du métier comprendra également que ledit deuxième compteur 24 est, autrement dit, subdivisé en deuxièmes compteurs élémentaires 38. Ces deuxièmes compteurs élémentaires 38 permettent d'effectuer un meilleur diagnostic en sachant alors plus précisément quel type d'erreur est à l'origine du comportement anormal détecté.

Chaque type d'erreur est par exemple choisi parmi le groupe consistant en : une erreur résultant d'un format d'appel erroné, une erreur résultant d'un problème matériel, une erreur résultant d'un appel service provoquant un accès mémoire non-autorisé et une erreur résultant d'un appel service non-autorisé.

Chaque deuxième compteur élémentaire 38 respectif est incrémenté, de préférence d'une unité, à chaque appel en erreur 26. Lorsque le deuxième compteur élémentaire 38 est incrémenté d'une unité à chaque appel en erreur 26, le deuxième seuil élémentaire correspondant est de préférence égal à 0.

Dans l'exemple de la figure 2, les appels 25, 26 émis par une application logicielle 14 respective au système d'exploitation 18 sont notées C_{i,j} où i est un indice correspondant à l'application logicielle 14 respective Ai, et j est un numéro de l'appel parmi les différents appels émis par ladite application logicielle 14 respective. A titre d'exemple, les appels émis par la première application logicielle A1 sont alors notés respectivement C_{1,1}, C_{1,2}, C_{1,3}, C_{1,4} et C_{1,5} dans l'exemple de la figure 2. De manière analogue, dans l'exemple de la figure 2, les appels au système d'exploitation 18 émis par la deuxième application logicielle A2 sont notés C_{2,1}, C_{2,2}, C_{2,3}, C_{2,4} et C_{2,5}, et les appels émis par la troisième application logicielle A3 sont quant à eux notés C_{3,1}, C_{3,2} et C_{3,3}.

Dans l'exemple de la figure 2, les appels réussis 25 sont par convention représentés sous forme d'un éclair blanc, et les appels en erreur 26 sont représentés sous forme d'un éclair noir, ou encore rempli.

Dans cet exemple de la figure 2, chaque premier compteur 23 associé à l'application logicielle Ai est noté Oᵢ, et chaque deuxième compteur 24 associé à ladite application logicielle Ai est noté Nᵢ.

Lorsqu'un premier compteur 23 respectif comporte un ensemble de premiers compteurs élémentaires 36, chaque premier compteur élémentaire 36 est noté O_{i,k} dans l'exemple de la figure 2, où i est l'indice associé à l'application Ai, et k est un numéro du premier compteur élémentaire 36 respectif au sein dudit ensemble. De manière analogue, lorsqu'un deuxième compteur 24 respectif comporte un ensemble de deuxièmes compteurs élémentaires 38, chaque deuxième compteur élémentaire 38 est noté N_{i,m}, dans l'exemple de la figure 2 où i est l'indice associé à l'application Ai, et m est un numéro du deuxième compteur élémentaire 38 respectif au sein dudit ensemble.

Dans l'exemple de la figure 2, deux premiers compteurs élémentaires O_{1,1} et O_{1,2}, et un deuxième compteur N₁ sont alors associés à la première application logicielle A1, et incrémentés au sein de la première partition P1 du système d'exploitation 18. Dans cet exemple, les appels notés C_{1,1} et C_{1,2} ont ainsi provoqué des incrémentations successives du premier compteur élémentaire O_{1,1}, les appels C_{1,3} et C_{1,4} ayant entraîné des incrémentations successives du deuxième compteur élémentaire O_{1,2}, et enfin l'appel en erreur C_{1,5} ayant entraîné l'incrémentation du deuxième compteur N₁.

Dans cet exemple de la figure 2, à la deuxième application logicielle A2 sont associés un premier compteur 23 noté O₂, et deux deuxièmes compteurs élémentaires 38, notés respectivement N_{2,1} et N_{2,2}, ces compteurs étant incrémentés dans la deuxième partition P2 du système d'exploitation 18. Les appels réussis 25 par la deuxième application logicielle A2, notés C_{2,1}, C_{2,2} et C_{2,3}, ont ainsi provoqué des incrémentations successives du premier compteur O₂, et les deux appels en erreur 26, notés respectivement C_{2,4} et C_{2,5}, ont provoqué l'incrémentation du deuxième compteur élémentaire N_{2,1}, et respectivement du deuxième compteur élémentaire N_{2,2}.

Pour la troisième application logicielle A3, trois premiers compteurs élémentaires 36, respectivement notés O_{3,1}, O_{3,2} et O_{3,3}, ainsi qu'un deuxième compteur 24, noté N₃, sont prévus dans la troisième partition P3 du système d'exploitation 18. Dans l'exemple de la figure 2, tous les appels effectués par la troisième application logicielle A3 sont des appels réussis 25, l'appel réussi C_{3,1} entraînant l'incrémentation du premier compteur élémentaire O_{3,1}, l'appel suivant C_{3,2} entraînant celle du premier compteur élémentaire O_{3,2}, et l'appel suivant C_{3,3} entraînant celle du premier compteur élémentaire O_{3,3}.

L'implémentation des premier et deuxième compteurs 23, 24, voir en complément facultatif des premiers compteurs élémentaires 36 et/ou des deuxièmes compteurs élémentaires 38, est par exemple effectuée en allouant des zones mémoires respectives auxdits compteurs dans chaque partition P1, P2, P3, et en rendant accessible en lecture ces zones mémoires au module d'acquisition 22.

L'homme du métier comprendra en outre que le système d'exploitation 18 comporte également un traitement logiciel inclus dans l'arbre d'appel du système d'exploitation 18 permettant d'implémenter chaque compteur correspondant en cas d'appel réussi 25, ou respectivement en cas d'appel en erreur 26.

L'homme du métier comprendra également que le système d'exploitation 18 est apte à déterminer si l'appel émis par l'application logicielle 14 surveillée est un appel réussi 25 et incrémentera alors le premier compteur 23 correspondant ; ou bien si cet appel est un appel en erreur 26, et incrémentera alors le deuxième compteur 24 correspondant.

Le fonctionnement du système électronique avionique 10 selon l'invention, et en particulier du dispositif électronique de surveillance 20, va désormais être expliqué à l'aide de la figure 3 représentant un organigramme d'un procédé, selon l'invention, de surveillance d'une application logicielle avionique 14 respective, apte à être exécutée sur la plateforme 16 hébergeant le système d'exploitation 18.

Lors d'une étape initiale 100, le dispositif de surveillance 20 acquiert, via son module d'acquisition 22, les valeurs respectives des premier et deuxième compteurs 23, 24 pour chaque application logicielle 14 surveillée.

Lorsqu'on complément facultatif, le premier compteur 23 comporte plusieurs compteurs élémentaires 36 et/ou le deuxième compteur 24 comporte plusieurs deuxièmes compteurs élémentaires 38, le module d'acquisition 22 acquiert alors la valeur respective de chacun des premiers compteurs élémentaires 36 dudit ensemble et/ou acquiert la valeur respective de chacun des deuxièmes compteurs élémentaires 38 dudit ensemble.

Le dispositif de surveillance 20 passe ensuite à l'étape suivante 110 lors de laquelle il compare, via son module de comparaison 28 et avec les premier et deuxième seuils S1, S2 respectifs, les valeurs respectives des premier et deuxième compteurs 23, 24, acquises lors de l'étape précédente 100 par le module d'acquisition 22 et pour chaque application logicielle 14 surveillée.

Lorsqu'on complément facultatif, le premier compteur 23 comporte plusieurs premiers compteurs élémentaires 36 et/ou le deuxième compteur 24 comporte plusieurs deuxièmes compteurs élémentaires 38, le module de comparaison 28 compare les valeurs respectives des premiers compteurs élémentaires 36 avec des premiers seuils élémentaires respectifs et/ou les valeurs respectives des deuxièmes compteurs élémentaires 38 avec des deuxièmes seuils élémentaires respectifs.

Le dispositif de surveillance 20 génère alors, lors de l'étape suivante 120 et via son module de génération 29, le signal d'alerte en cas de détection d'un comportement anormal de l'application logicielle 14 surveillée, ce comportement anormal correspondant au cas où le premier compteur 23 est de valeur inférieure au premier seuil S1 au cours de la période temporelle T prédéfinie et/ou au cas où le deuxième compteur 24 est de valeur supérieure au deuxième seuil S2.

Lorsqu'on complément facultatif le premier compteur 23 comporte plusieurs premiers compteurs élémentaires 36 et/ou le deuxième compteur 24 comporte plusieurs deuxièmes compteurs élémentaires 38, le module de génération 29 détecte un comportement anormal de l'application logicielle 14 surveillée si au moins l'un des premiers compteurs élémentaires est de valeur inférieure au premier seuil élémentaire respectif au cours de la période temporelle T prédéfinie et/ou si au moins l'un des deuxièmes compteurs élémentaires 38 est de valeur supérieure au deuxième seuil élémentaire respectif.

A la fin de l'étape 120, le dispositif de surveillance 20 retourne à l'étape initiale 100 afin d'acquérir de nouvelles valeurs respectives des premier et deuxième compteurs 23, 24 pour chaque application logicielle 14 surveillée. La fréquence d'acquisition prédéfinie étant de préférence supérieure à 2 Hz, de préférence encore sensiblement comprise entre 10 Hz et 20 Hz, l'homme du métier comprendra alors que les étapes 100, 110, 120 sont effectuées au cours d'une période d'exécution de durée inférieure à 500 ms, de préférence encore de durée comprise entre 50 ms et 100 ms.

Ainsi, le dispositif de surveillance 20 selon l'invention permet de surveiller, efficacement et avec un faible impact en terme de temps réel, la ou les applications logicielles avioniques 14 via les premier et deuxième compteurs 23, 24.

Lorsqu'on complément facultatif, au moins un premier compteur 23 respectif est subdivisé en premiers compteurs élémentaires 36, le dispositif de surveillance 20 permet alors en outre de fournir des informations plus précises sur la nature des services appelés et sur le nombre d'appel(s) à ces services.

Lorsqu'on complément facultatif, au moins un deuxième compteur 24 respectif est subdivisé en deuxièmes compteurs élémentaires 38, le dispositif de surveillance 20 permet alors de fournir un meilleur diagnostic quant au comportement anormal détecté, chaque deuxième compteur élémentaire 38 respectif correspondant alors à une erreur respective, par exemple à une erreur résultant d'un format d'appel erroné, à une erreur résultant d'un problème matériel, à une erreur résultant d'un appel service provoquant un accès mémoire non-autorisé, ou encore à une erreur résultant d'un appel service non-autorisé.

On conçoit ainsi que le dispositif de surveillance 20 selon l'invention et le procédé de surveillance associé, permettent de détecter plus efficacement une attaque visant la ou les applications logicielles 14 surveillées, ou un comportement anormal de la ou des application logicielles 14 surveillées.

## Revendications

1. Dispositif électronique (20) de surveillance d'au moins une application logicielle avionique (14) apte à être exécutée sur une plateforme (16) hébergeant un système d'exploitation (18) offrant des services, la plateforme (16) étant destinée à être embarquée à bord d'un aéronef, le dispositif électronique de surveillance (20) comprenant :
- un module d'acquisition (22) configuré pour acquérir des valeurs respectives de premier (23) et deuxième (24) compteurs pour chaque application logicielle (14) surveillée, les premier (23) et deuxième (24) compteurs étant chacun un compteur d'appel(s) (25, 26) émis par l'application logicielle (14) surveillée à un ou plusieurs services du système d'exploitation (18), le premier compteur (23) étant incrémenté à chaque appel réussi (25) à un service respectif et le deuxième compteur (24) étant incrémenté à chaque appel en erreur (26) ;
- un module de comparaison (28) configuré pour comparer les valeurs respectives des premier (23) et deuxième (24) compteurs, acquises pour chaque application logicielle (14) surveillée, avec des premier (S1) et deuxième (S2) seuils respectifs ; et
- un module de génération (29) configuré pour générer un signal d'alerte en cas de détection d'un comportement anormal de l'application logicielle (14) surveillée, correspondant au premier compteur (23) de valeur inférieure au premier seuil (S1) au cours d'une période temporelle (T) prédéfinie et/ou au deuxième compteur (24) de valeur supérieure au deuxième seuil (S2).

2. Dispositif (20) selon la revendication 1, dans lequel le premier compteur (23) comporte un ensemble de premiers compteurs élémentaires (36), chaque premier compteur élémentaire (36) étant associé à un type d'appel émis par l'application logicielle (14) surveillée à destination du système d'exploitation (18), un unique premier compteur élémentaire (36) dudit ensemble étant incrémenté à chaque appel réussi (25), et
dans lequel le module d'acquisition (22) est configuré pour acquérir la valeur respective de chacun des premiers compteurs élémentaires (36) dudit ensemble ; le module de comparaison (28) est configuré pour comparer les valeurs respectives des premiers compteurs élémentaires (36) avec des premiers seuils élémentaires respectifs ; et le module de génération (29) est configuré pour générer le signal d'alerte en cas de détection d'un comportement anormal de l'application logicielle (14) surveillée, correspondant à au moins l'un des premiers compteurs élémentaires (36) de valeur inférieure au premier seuil élémentaire respectif au cours de la période temporelle (T) prédéfinie.

3. Dispositif (20) selon la revendication 2, dans lequel chaque type d'appel est choisi parmi le groupe consistant en : un appel à un service d'acquisition d'entrée(s)/sortie(s), un appel à un service de gestion de processus, un appel à un service de gestion de protocole(s) de communication et la gestion d'une temporisation, en particulier son déclenchement.

4. Dispositif (20) selon l'une quelconque des revendications précédentes, dans lequel le deuxième compteur (24) comporte un ensemble de deuxièmes compteurs élémentaires (38), chaque deuxième compteur élémentaire (38) étant associé à un type d'erreur, un unique deuxième compteur élémentaire (38) dudit ensemble étant incrémenté à chaque appel en erreur (26), et
dans lequel le module d'acquisition (22) est configuré pour acquérir la valeur respective de chacun des deuxièmes compteurs élémentaires (38) dudit ensemble ; le module de comparaison (28) est configuré pour comparer les valeurs respectives des deuxièmes compteurs élémentaires (38) avec des deuxièmes seuils élémentaires respectifs ; et le module de génération (29) est configuré pour générer le signal d'alerte en cas de détection d'un comportement anormal de l'application logicielle (14) surveillée, correspondant à au moins l'un des deuxièmes compteurs élémentaires (38) de valeur supérieure au deuxième seuil élémentaire respectif.

5. Dispositif (20) selon la revendication 4, dans lequel chaque type d'erreur est choisi parmi le groupe consistant en : une erreur résultant d'un format d'appel erroné, une erreur résultant d'un appel service provoquant un accès mémoire non-autorisé et une erreur résultant d'un appel service non-autorisé.

6. Dispositif (20) selon l'une quelconque des revendications précédentes, dans lequel le module d'acquisition (22) est configuré pour acquérir régulièrement les valeurs respectives des premier (23) et deuxième (24) compteurs pour chaque application logicielle (14) surveillée,
le module d'acquisition (22) étant de préférence configuré pour acquérir à une fréquence d'acquisition prédéfinie lesdites valeurs respectives des premier (23) et deuxième (24) compteurs,
la fréquence d'acquisition prédéfinie étant de préférence supérieure à 2 Hz, de préférence encore sensiblement comprise entre 10 Hz et 20 Hz.

7. Dispositif (20) selon l'une quelconque des revendications précédentes, dans lequel la période temporelle (T) prédéfinie est de valeur sensiblement comprise entre 100 ms et 500 ms, de préférence sensiblement égale à 200 ms.

8. Système électronique avionique (10) comprenant :
- une mémoire (12) apte à stocker au moins une application logicielle (14) avionique ;
- une plateforme (16) apte à exécuter chaque application logicielle (14) avionique, la plateforme (16) hébergeant un système d'exploitation (18) offrant des services ; et
- un dispositif électronique (20) de surveillance de chaque application logicielle (14) avionique, le dispositif électronique de surveillance (20) étant selon l'une quelconque des revendications précédentes.

9. Procédé de surveillance d'une application logicielle (14) avionique apte à être exécutée sur une plateforme (16) hébergeant un système d'exploitation (18) offrant des services, la plateforme (16) étant destinée à être embarquée à bord d'un aéronef,
le procédé étant mis en oeuvre par un dispositif électronique de surveillance (20) et comprenant les étapes consistant à :
- acquérir (100) des valeurs respectives de premier (23) et deuxième (24) compteurs pour chaque application logicielle (14) surveillée, les premier (23) et deuxième (24) compteurs étant chacun un compteur d'appel(s) (25, 26) émis par l'application logicielle (14) surveillée à un ou plusieurs services du système d'exploitation (18), le premier compteur (23) étant incrémenté à chaque appel réussi (25) à un service respectif et le deuxième compteur (24) étant incrémenté à chaque appel en erreur (26) ;
- comparer (110) les valeurs respectives des premier (23) et deuxième (24) compteurs, acquises pour chaque application logicielle (14) surveillée, avec des premier (S1) et deuxième (S2) seuils respectifs ; et
- générer (120) un signal d'alerte en cas de détection d'un comportement anormal de l'application logicielle (14) surveillée, correspondant au premier compteur (23) de valeur inférieure au premier seuil (S1) au cours d'une période temporelle (T) prédéfinie et/ou au deuxième compteur (24) de valeur supérieure au deuxième seuil (S2).

10. Programme d'ordinateur comportant des instructions logicielles qui, lorsqu'elles sont exécutées par un ordinateur, mettent en oeuvre un procédé selon la revendication précédente.

## Patentansprüche

1. Elektronische Vorrichtung (20) zur Überwachung mindestens einer Avionik-Softwareanwendung (14), die geeignet ist, um auf einer Plattform (16) ausgeführt zu werden, die ein Betriebssystem (18) beherbergt, das Dienste anbietet, wobei die Plattform (16) dazu bestimmt ist, an Bord eines Luftfahrzeugs zu sein, die elektronische Überwachungsvorrichtung (20) umfassend:
- ein Erfassungsmodul (22), das konfiguriert ist, um jeweilige Werte von einem ersten (23) und einem zweiten (24) Zähler für jede überwachte Softwareanwendung (14) zu erfassen, wobei der erste (23) und der zweite (24) Zähler jeweils ein Zähler von Aufruf(en) (25, 26) sind, die von der überwachten Softwareanwendung (14) an einen oder mehrere Dienste des Betriebssystems (18) gesendet werden, wobei der erste Zähler (23) bei jedem erfolgreichen Aufruf (25) an einen jeweiligen Dienst inkrementiert wird und der zweite Zähler (24) bei jedem fehlerhaften Aufruf (26) inkrementiert wird;
- ein Vergleichsmodul (28), das konfiguriert ist, um die jeweiligen Werte des ersten (23) und des zweiten (24) Zählers, die für jede überwachte Softwareanwendung (14) erfasst werden, mit einem jeweiligen ersten (S1) und zweiten (S2) Schwellenwert zu vergleichen; und
- ein Generierungsmodul (29), das konfiguriert ist, um ein Warnsignal zu erzeugen, wenn ein anormales Verhalten der überwachten Softwareanwendung (14) erfasst wird, das dem ersten Zähler (23) mit einem Wert unterhalb des ersten Schwellenwerts (S1) während einer vordefinierten Zeitperiode (T) und/oder dem zweiten Zähler (24) mit einem Wert oberhalb des zweiten Schwellenwerts (S2) entspricht.

2. Vorrichtung (20) nach Anspruch 1, wobei der erste Zähler (23) einen Satz von ersten Elementarzählern (36) umfasst, wobei jeder erste Elementarzähler (36) mit einer Art von Aufruf assoziiert ist, der von der überwachten Softwareanwendung (14) an das Betriebssystem (18) gesendet wird, wobei ein einzelner erster Elementarzähler (36) des Satzes bei jedem erfolgreichen Aufruf (25) inkrementiert wird, und
wobei das Erfassungsmodul (22) konfiguriert ist, um den jeweiligen Wert von jedem der ersten Elementarzähler (36) des Satzes zu erfassen; das Vergleichsmodul (28) konfiguriert ist, um die jeweiligen Werte der ersten Elementarzähler (36) mit jeweiligen ersten Elementarschwellenwerten zu vergleichen; und das Erzeugungsmodul (29) konfiguriert ist, um das Warnsignal zu erzeugen, wenn ein anormales Verhalten der überwachten Softwareanwendung (14) erfasst wird, das mindestens einem der ersten Elementarzähler (36) entspricht, dessen Wert während der vordefinierten Zeitperiode (T) unter dem jeweiligen ersten Elementarschwellenwert ist.

3. Vorrichtung (20) nach Anspruch 2, wobei jede Art von Aufruf ausgewählt ist aus der Gruppe, bestehend aus: einem Aufruf an einen Dienst zum Erfassen von Eingabe(n)/Ausgabe(n), einem Aufruf an einen Dienst zum Verwalten von Prozessen, einem Aufruf an einen Dienst zum Verwalten von Kommunikationsprotokoll(en) und Verwalten eines Zeitgebers, insbesondere seiner Auslösung.

4. Vorrichtung (20) nach einem der vorherigen Ansprüche, wobei der zweite Zähler (24) einen Satz von zweiten Elementarzählern (38) umfasst, wobei jeder zweite Elementarzähler (38) mit einem Fehlertyp assoziiert ist, wobei ein einzelner zweiter Elementarzähler (38) des Satzes bei jedem Fehleraufruf (26) inkrementiert wird, und
wobei das Erfassungsmodul (22) konfiguriert ist, um den jeweiligen Wert von jedem der zweiten Elementarzähler (38) des Satzes zu erfassen; das Vergleichsmodul (28) konfiguriert ist, um die jeweiligen Werte der zweiten Elementarzähler (38) mit jeweiligen zweiten Elementarschwellenwerten zu vergleichen; und das Erzeugungsmodul (29) konfiguriert ist, um das Warnsignal zu erzeugen, wenn ein anormales Verhalten der überwachten Softwareanwendung (14) erkannt wird, das mindestens einem der zweiten Elementarzähler (38) mit einem Wert entspricht, der größer ist als der jeweilige zweite Elementarschwellenwert.

5. Vorrichtung (20) nach Anspruch 4, wobei jeder Fehlertyp ausgewählt ist aus der Gruppe, bestehend aus Folgendem: einem Fehler, der aus einem falschen Anrufformat resultiert, einem Fehler, der aus einem Dienstanruf resultiert, der einen nicht autorisierten Speicherzugriff verursacht, und einem Fehler, der aus einem nicht autorisierten Dienstanruf resultiert.

6. Vorrichtung (20) nach einem der vorherigen Ansprüche, wobei das Erfassungsmodul (22) konfiguriert ist, um regelmäßig die jeweiligen Werte des ersten (23) und zweiten (24) Zählers für jede überwachte Softwareanwendung (14) zu erfassen,
wobei das Erfassungsmodul (22) vorzugsweise konfiguriert ist, um die jeweiligen Werte des ersten (23) und zweiten (24) Zählers mit einer vordefinierten Erfassungsfrequenz zu erfassen,
wobei die vordefinierte Erfassungsfrequenz vorzugsweise größer ist als 2 Hz, bevorzugter im Wesentlichen zwischen 10 Hz und 20 Hz liegt.

7. Vorrichtung (20) nach einem der vorherigen Ansprüche, wobei die vordefinierte Zeitperiode (T) einen Wert aufweist, der im Wesentlichen zwischen 100 ms und 500 ms liegt, vorzugsweise im Wesentlichen gleich 200 ms ist.

8. Elektronisches Avioniksystem (10), umfassend:
- einen Speicher (12), der geeignet ist, um mindestens eine Avionik-Softwareanwendung (14) zu speichern;
- eine Plattform (16), die geeignet ist, um jede Softwareanwendung (14) auszuführen, wobei die Plattform (16) ein Betriebssystem (18) beherbergt, das Dienste anbietet; und
- eine elektronische Vorrichtung (20) zur Überwachung von jeder Avionik-Softwareanwendung (14), wobei die elektronische Überwachungsvorrichtung (20) nach einem der vorherigen Ansprüche ist.

9. Verfahren zur Überwachung einer Avionik-Softwareanwendung (14), die geeignet ist, um auf einer Plattform (16) ausgeführt zu werden, die ein Betriebssystem (18) beherbergt, das Dienste anbietet, wobei die Plattform (16) dazu bestimmt ist, an Bord eines Luftfahrzeugs zu sein,
wobei das Verfahren von einem elektronischen Überwachungssystem (20) implementiert wird und umfassend die Schritte, die aus Folgendem bestehen:
- Erfassen (100) jeweiliger Werte von einem ersten (23) und einem zweiten (24) Zähler für jede überwachte Softwareanwendung (14), wobei der erste (23) und der zweite (24) Zähler jeweils ein Zähler von Aufruf(en) (25, 26) sind, die von der überwachten Softwareanwendung (14) an einen oder mehrere Dienste des Betriebssystems (18) gesendet werden, wobei der erste Zähler (23) bei jedem erfolgreichen Aufruf (25) an einen jeweiligen Dienst inkrementiert wird und der zweite Zähler (24) bei jedem fehlerhaften Aufruf (26) inkrementiert wird;
- Vergleichen (110) der jeweiligen Werte des ersten (23) und des zweiten (24) Zählers, die für jede überwachte Softwareanwendung (14) erfasst werden, mit einem jeweiligen ersten (S1) und zweiten (S2) Schwellenwert; und
- Erzeugen (120) eines Warnsignals, wenn ein anormales Verhalten der überwachten Softwareanwendung (14) erfasst wird, das dem ersten Zähler (23) mit einem Wert unterhalb des ersten Schwellenwerts (S1) während einer vordefinierten Zeitperiode (T) und/oder dem zweiten Zähler (24) mit einem Wert oberhalb des zweiten Schwellenwerts (S2) entspricht.

10. Computerprogramm, umfassend Softwareanweisungen, die, wenn sie von einem Computer ausgeführt werden, ein Verfahren nach dem vorherigen Anspruch implementieren.

## Claims

1. Electronic device (20) for monitoring at least one avionics software application (14) capable of being executed on a platform (16) hosting an operating system (18) offering services, the platform (16) being intended to be carried on board an aircraft, the electronic monitoring device (20) comprising:
- an acquisition module (22) configured to acquire respective values of first (23) and second (24) counters for each monitored software application (14), the first (23) and second (24) counters each being a counter (25, 26) of calls sent by the monitored software application (14) to one or more services of the operating system (18), the first counter (23) being incremented upon each successful call (25) to a respective service and the second counter (24) being incremented upon each failed call (26);
- a comparison module (28) configured to compare the respective values of the first (23) and second (24) counters, acquired for each monitored software application (14), with respective first (S1) and second (S2) thresholds; and
- a generation module (29) configured to generate a warning signal in the event of detection of abnormal behavior of the monitored software application (14), corresponding to the first counter (23) with a value lower than the first threshold (S1) during a predefined time period (T) and/or to the second counter (24) with a value greater than the second threshold (S2).

2. Device (20) according to claim 1, wherein the first counter (23) comprises a set of first elementary counters (36), each first elementary counter (36) being associated with a type of call sent by the monitored application software (14) to the operating system (18), a single first elementary counter (36) of said set being incremented upon each successful call (25), and
wherein the acquisition module (22) is configured to acquire the respective value of each of the first elementary counters (36) of said set; the comparison module (28) being configured to compare the respective values of the first elementary counters (36) with respective first elementary thresholds; and the generation module (29) is configured to generate the warning signal in the event of detection of abnormal behavior of the monitored software application (14), corresponding to at least one of the first elementary counters (36) with a value below the respective first elementary threshold during the predefined time period (T).

3. Device (20) according to claim 2, wherein each type of call is selected from the group consisting of: a call to an input/output acquisition service, a call to a process management service, a call to a communication protocol management service, and the management of a timer, in particular its triggering.

4. Device (20) according to any one of the preceding claims, wherein the second counter (24) comprises a set of second elementary counters (38), each second elementary counter (38) being associated with a type of failure, a single second elementary counter (38) of said set being incremented upon each failed call (26), and
wherein the acquisition module (22) is configured to acquire the respective value of each of the second elementary counters (38) of said set; the comparison module (28) being configured to compare the respective values of the second elementary counters (38) with respective second elementary thresholds; and the generation module (29) is configured to generate the warning signal in the event of detection of abnormal behavior of the monitored software application (14), corresponding to at least one of the second elementary counters (38) with a value greater than the respective second elementary threshold.

5. Device (20) according to claim 4, wherein each type of failure is selected from the group consisting of: a failure resulting from an incorrect call format, a failure resulting from a hardware problem, a failure resulting from a service call causing an unauthorized memory access and a failure resulting from an unauthorized service call.

6. Device (20) according to any one of the preceding claims, wherein the acquisition module (22) is configured to regularly acquire the respective values of the first (23) and second (24) counters for each monitored software application (14),
the acquisition module (22) preferably being configured to acquire at a predefined acquisition frequency said respective values of the first (23) and second (24) counters,
the predefined acquisition frequency being preferably greater than 2 Hz, more preferably substantially between 10 Hz and 20 Hz.

7. Device (20) according to any one of the preceding claims, wherein the predefined time period (T) is of a value substantially between 100 ms and 500 ms, preferably substantially equal to 200 ms.

8. Avionics system (10) comprising:
- a memory (12) capable of storing at least one avionics software application (14);
- a platform (16) capable of executing each avionics software application (14), the platform (16) hosting an operating system (18) offering services; and
- an electronic device (20) for monitoring each avionics software application (14), the electronic monitoring device (20) being according to any one of the preceding claims.

9. A method of monitoring an avionics software application (14) capable of being executed on a platform (16) hosting an operating system (18) offering services, the platform (16) being intended to be carried on board an aircraft,
the method being implemented by an electronic monitoring device (20) and comprising the steps of:
- acquire (100) respective values of first (23) and second (24) counters for each monitored software application (14), the first (23) and second (24) counters each being a counter (25, 26) of calls sent by the monitored software application (14) to one or more services of the operating system (18), the first counter (23) being incremented upon each successful call (25) to a respective service, and the second counter (24) being incremented upon each failed call (26);
- compare (110) the respective values of the first (23) and second (24) counters, acquired for each monitored software application (14), with respective first (S1) and second (S2) thresholds; and
- generate (120) a warning signal in the event of detection of abnormal behavior of the monitored software application (14), corresponding to the first counter (23) with a value lower than the first threshold (S1) during a predefined time period (T) and/or to the second counter (24) with a value greater than the second threshold (S2).

10. A computer program comprising software instructions which, when executed by a computer, implement a method according to the preceding claim.
